# EUROPÄISCHE PATENTSCHRIFT

(11) **EP 0 583 599 B1**
(45) Veröffentlichungstag und Bekanntmachung des Hinweises auf die Patenterteilung: **19.02.1997**
(21) Anmeldenummer: 93111012.6
(22) Anmeldetag: 09.07.1993
(51) Int. Cl.: B29C 45/16, E03C 1/10, F16L 37/40

(54) **Verfahren zum Herstellen sanitärer Einbauteile sowie danach hergestelltes Einbauteil**
Method for manufacturing sanitary fittings and fitting obtained thereby
Procédé pour la fabrication d'éléments sanitaires et élément obtenu par ce procédé

(30) Priorität: 19.08.1992 DE 4227356
(43) Veröffentlichungstag der Anmeldung: 23.02.1994
(73) Patentinhaber: DIETER WILDFANG GmbH, D-79379 Müllheim (DE)
(72) Erfinder: Nehm, Holger, D-7840 Müllheim (DE)
(74) Vertreter: Schmitt, Hans, Dipl.-Ing.

(56) Entgegenhaltungen:
- EP-A- 0 031 978
- DE-A- 4 039 280
- DE-C- 3 601 403
- FR-A- 2 439 077
- US-A- 4 268 237

## Beschreibung

Die Erfindung bezieht sich auf ein Verfahren zum Herstellen eines im sanitären Bereich einsetzbaren Rückflußverhinderers mittels eines Kunststoff-Spritzverfahrens, wobei der Rückflußverhinderer einen Grundkörper, eine äußere Ringdichtung und eine mit einem Schließkörper zusammenarbeitende, innere Lippendichtung aufweist.

Beim Herstellen solcher Rückflußverhinderer ist es bisher notwendig, die separat gefertigten Teile - Einbau- oder Grundkörper, Dichtungen und dergleichen - anschließend zusammenzumontieren und danach noch eine Dichtigkeitsprüfung vorzunehmen, insbesondere auch im Abdichtbereich zwischen dem Dichtelement und dem ihn haltenden Grundkörper. Dies ist vergleichsweise aufwendig.
Bei der Herstellung des Grundkörpers mittels einer Spritzgußform und zweiteiligen Backen muß beachtet werden, daß der nutartige Einschnitt, beispielsweise für einen äußeren O-Ring in dem Backen-Trennbereich weitestgehend gratfrei gefertigt wird, da ein solcher Grat zu Undichtigkeiten führen kann.
Undichtigkeiten können auch durch einen sich mit der Zeit einstellenden Formversatz der beiden Spritzgußform-Backen zueinander auftreten.
Weiterhin muß beachtet werden, daß O-Ringe innen und außen eine umlaufende Trenn-Naht aufweisen und daß für eine gute Abdichtung eine lagerichtige Montage notwendig ist. Würden die Trennahte durch Verdrehen des O-Ringes schraubenlinienförmig umlaufen, würden sich Undichtigkeitskanäle bilden.
Wegen der erforderlichen Vorspannung der montierten O-Ringe ist insbesondere bei längeren Lagerzeiten ein Verspröden des Dichtungsmateriales begünstigt.
Bei der mit einem Verschlußkörper zusammenarbeitende Lippendichtung, ist die Montage problematisch, da diese Lippendichtung sehr klein und die Handhabung bei der Montage schwierig ist. Da diese Dichtung nach dem Einsetzen nicht gesichert und gehalten ist, muß die Lage des Grundkörpers im weiteren Montageablauf so beibehalten bleiben, daß die Dichtung nach dem Einsetzen nicht wieder herausfällt. Durch konstruktive Maßnahmen bei den weiteren Montageteilen muß die Dichtung in Einsetzstellung gesichert werden, beispielsweise durch einen zu montierenden Unterstützungsring.

Die einzelnen Montageteile dürfen nur sehr geringe Maßtoleranzen aufweisen, da sich sonst die einzelnen Fehler bis zu einer nicht mehr akzeptablen Gesamtmaßabweichung aufaddieren können. Dies bezieht sich auf die Ringnut oder Formnut für die Dichtringe und auch auf den Querschnitt der Dichtungen selbst.
Bei der Montage der einzelnen Teile können auch Fremdkörper - Haare, Fusseln oder sonstige Teilchen - zwischen die einzelnen Montageteile gelangen, was ebenfalls zu Undichtigkeiten führen kann.

Aufgabe der vorliegenden Erfindung ist es, ein Herstellungsverfahren und ein danach hergestelltes Produkt zu schaffen, wobei die vorerwähnten Nachteile vermieden werden. Insbesondere sollen die Herstellung und die Montage wesentlich vereinfacht sein. Trotz dieser Vereinfachungen soll eine besonders geringe Maßtoleranz der fertigen Teile erreicht werden, wobei dies auch bei einer Massenfertigung mit großen Stückzahlen der Fall sein soll. Schließlich soll durch die erfindungsgemäßen Maßnahmen auch die Möglichkeit von Konstruktionsvereinfachungen bestehen.

Zur Lösung dieser Aufgabe wird bezüglich des Verfahrens vorgeschlagen, daß in einem ersten Arbeitsgang der Grundkörper des Rückflußverhinderers gespritzt wird, daß anschließend die äußere Ringdichtung und die innere Lippendichtung gemeinsam in einem zweiten Arbeitsgang über miteinander verbundene Anspritzkanäle beziehungsweise Verbindungskanäle in die im Grundkörper dafür vorhandenen Aufnahmeöffnungen eingespritzt werden und durch den Spritzvorgang mit dem Grundkörper dicht verbunden werden.

Aus der FR-A-2 439 077 ist ein Verfahren bekannt, bei dem ein Rohr mit einer innenseitig am Ende angespritzten Dichtung hergestellt wird. Dabei wird aber nicht gleichzeitig eine Außendichtung mitgespritzt und es lassen sich mit diesem Verfahren keine Rückflußverhinderer auf die besonders einfache, erfindungsgemäße Weise und mit den erzielten Vorteilen herstellen.

Durch das erfindungsgemäße Verfahren entfallen die Montageschritte für das Anbringen der Dichtungen, da diese in der Spritzgußmaschine gleich mitgespritzt werden. Durch dieses Spritzverfahren wird eine gute Abdichtung im Übergangsbereich zwischen Grundkörper und den Dichtungen geschaffen, so daß unter anderem auch dadurch sich an die Herstellung beziehungsweise Montage anschließende Dichtigkeitsprüfungen wie bisher nicht mehr erforderlich sind. Die Dichtungen sind durch das Spritzen auch haltbar mit dem Grundkörper verbunden, so daß keine umständlichen Zusatzmaßnahmen bei der Montage sowie dem konstruktiven Aufbau erforderlich sind. Eventuell beim Herstellen des Grundkörpers auftretende Grate im Aufnahme- oder Lagerbereich der Dichtungen oder sonstige, zum Beispiel durch einen Formversatz hervorgerufene Unregelmäßigkeiten am Grundkörper wirken sich nun nicht mehr nachteilig aus, da solche Unregelmäßigkeiten durch die gespritzten Dichtungen überdeckt werden.
Besondere Maßnahmen am Montageplatz, um Fremdkörper - Haare, Fusseln - fernzuhalten, sind nun nicht mehr erforderlich, da der Grundkörper und die Dichtungen als komplette Montageeinheit am Montageplatz vorliegen.
Da das Material der am Grundkörper gespritzten Dichtungen in entspannter Lage vorliegt, ist auch eine größere Langzeitstabilität und Haltbarkeit bei einer längeren Lagerung zu erwarten.
Zweckmäßigerweise wird das Anspritzen der Dichtungen außerhalb des jeweiligen Dicht-Anlagebereiches der Dichtungen vorgenommen. Dadurch werden spätere, durch Anspritzstellen hervorgerufene Undichtigkeitsstellen vermieden.

Bei einem Rückflußverhinderer wird zur Lösung der gestellten Aufgabe vorgeschlagen, daß der Grundkörper und die Dichtungen Kunststoff-Spritzgußteile aus unterschiedlichem Material sind, daß bei den benachbart angeordneten Dichtungen die dafür vorgesehenen Einformungen in dem Grundkörper über einen oder mehrere Verbindungskanäle, die durch mit Dichtungsmaterial gefüllte Spritzkanäle gebildet sind, miteinander verbunden sind, und daß die Dichtungen durch Anspritzen mit dem Grundkörper dicht verbunden sind.
Der Grundkörper mit den Dichtungen besteht hier praktisch "aus einem Guß", wobei das dichte Verbinden der gegenüber dem Grundkörper aus anderem, meist weicherem und elastischerem Material bestehenden Dichtungen beim Spritzvorgang erfolgt.
Durch das direkte Anspritzen der Dichtungen an den Grundkörper läßt sich eine besondere gute Maßgenauigkeit und Maßkonstanz auch bei großen Stückzahlen des Einbauteiles oder dergleichen realisieren.
Vorteilhaft ist es auch, daß beide Dichtungen von einer gemeinsamen Anspritzseite gespritzt werden können und durch die Verbindungskanäle ist auch eine die Dichtungen gegeneinander stabilisierende Halteverbindung geschaffen.
In die Innenhöhlung des Grundkörpers einsetzbare Führungsteile für einen mit der Lippendichtung zusammenwirkenden Schließkörper brauchen nicht mehr wie bisher mit einem Unterstützungsring zum Festlegen der Lippendichtung ausgerüstet sein, da diese Dichtung durch den Spritzvorgang selbst festgelegt ist.
Sind noch weitere Teile mit dem Rückflußverhinderer zu verbinden, kann dies in einfacheren Montageschritten erfolgen, bei denen zum Beispiel eine Lagefixierung der Dichtungen und dergleichen nicht erforderlich ist, da diese Dichtungen bereits fest mit dem Grundkörper verbunden sind. Somit wird der Montageaufwand verringert.

Zweckmäßigerweise weist der Grundkörper im Bereich der Dichtungen Aufnahmekammern in Form von offenen Einformungen, Ringnuten oder dergleichen auf. Dadurch kann die Dichtung auch in angespritzter Form ein für ein elastisches Nachgeben notwendiges Querschnittsvolumen aufweisen und ist darüberhinaus auch formschlüssig gehalten. Vorteilhaft ist es, wenn bei den Öffnungsseiten der Einformungen oder dergleichen Anspritzstellen, gegebenenfalls zusätzliche Anspritzstellen vorgesehen sind, die sich vorzugsweise außerhalb des Anlage-Dichtbereiches befinden, wobei die Dichtungen wenigstens einen, vorzugsweise umlaufenden Querschnitts-Rücksprung von ihrer äußeren Dichtungs-Anlageseite haben, in dem sich die Anspritzstelle(n) befindet (befinden).
Anspritzstellen direkt an den "offenen" Seiten der jeweiligen Dichtung haben den Vorteil, daß separate Spritzkanäle innerhalb des Grundkörpers nicht erforderlich sind.
Zusätzliche Ausgestaltungen der Erfindung sind in den weiteren Unteransprüchen aufgeführt. Nachstehend ist die Erfindung mit ihren wesentlichen Einzelheiten anhand der Zeichnungen noch näher erläutert.

Es zeigt:
- Fig. 1: einen Längsschnitt durch einen Rückflußverhinderer mit einer äußeren Ringdichtung und einer inneren Lippendichtung,
- Fig. 2: eine vergrößerte Detail-Schnittdarstellung im Bereich der beiden Dichtungen,
- Fig. 3: eine etwa Figur 1 entsprechende Darstellung eines Rückflußverhinderers, hier jedoch mit anderer Ausführung der äußeren Ringdichtung,
- Fig. 4: eine vergrößerte Detaildarstellung im Bereich der Dichtungen gemäß Figur 3,
- Fig. 5: einen Teillängsschnitt durch einen Grundkörper eines Rückflußverhinderers mit innen angeordneter Lippendichtung und
- Fig. 6: eine vergrößerte Detaildarstellung im Bereich der Dichtung des Rückflußverhinderers gemäß Figur 5.

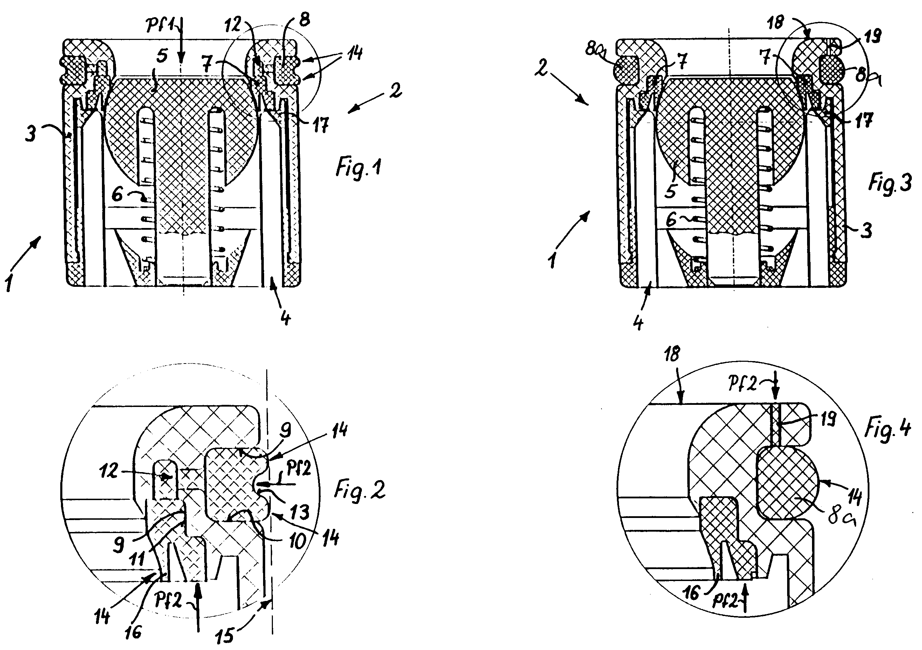

Ein in Figur 1 gezeigtes Einbauteil 1 ist als Rückflußverhinderer 2 ausgebildet und weist ein Außengehäuse 3 auf, in dem sich innerhalb eines Ventilführungsteiles 4 ein Schließkörper 5 befindet.
In Durchströmrichtung (Pfeil Pf1) kann der Schließkörper 5 gegen die Rückstellkraft einer Feder 6 in Öffnungsstellung verschoben werden und in der gezeigten Schließstellung liegt er an einer inneren Lippendichtung 7 an.

Der Rückflußverhinderer ist in den in Figur 1 bis 4 gezeigten Ausführungsbeispielen zum Einbau in Rohrleitungen vorgesehen und weist außenseitig an seinem Außengehäuse 3 eine Ringdichtung 8 auf.

Sowohl die Lippendichtung 7 als auch die Ringdichtung 8 sind durch ein Spritzverfahren mit dem Außengehäuse 3 verbunden. Sie werden bei dem Spritzen des Außengehäuses 3 in einem zweiten Spritzvorgang in die im Außengehäuse 3 befindlichen Einformungen 9 eingebracht. Für die Ringdichtung 8 ist als Einformung eine nach außen offene Ringnut 10 und für die Lippendichtung 7 eine innenseitig im Außengehäuse 3 befindliche, in axialer Richtung des Rückflußverhinderers 2 offene und sich stufenförmig fortsetzende Aufnahmenut 11 vorgesehen (vgl. Figur 2).
Für das Anspritzen der beiden Dichtungen 7, 8 sind Anspritzstellen vorgesehen, die durch die Pfeile Pf 2 gekennzeichnet sind. In dem in Figur 1 und 2 gezeigten Ausführungsbeispiel sind diese Anspritzstellen an außerhalb des Dichtungs-Anlagebereiches befindlichen Stellen vorgesehen. Da die Einformungen 9 über Verbindungskanäle 12 miteinander verbunden sind, würde es auch genügen, von einer Seite her anzuspritzen.
Bei der Ringdichtung 8 ist außenseitig zumindest im Bereich von vorgesehenen Anspritzstellen ein Querschnitts-Rücksprung oder Einsenkungen 13 vorgesehen, so daß ein sich gegebenenfalls bildender Anspritzgrat außerhalb des Dichtungs-Anlagebereiches 14 an der Innenseite 15 eines in Figur 2 strichliniert angedeuteten Rohres liegt.
Wie bereits vorerwähnt, würde es genügen, von einer Seite her anzuspritzen und beide Dichtungen 7, 8 in einem einzigen Spritz-Arbeitsgang einzubringen. Gerade bei kompliziert geformten Dichtungen kann es jedoch auch zweckmäßig sein, von mehreren Seiten her und/oder über mehrere Anspritzstellen anzuspritzen.

Eine gegebenenfalls zusätzlich vorgesehene, innenseitige Anspritzstelle kann bei der Lippendichtung 7 in deren radial äußerem Bereich und damit außerhalb der eigentlichen Dichtlippe 16 vorgesehen sein.

Durch den Spritzvorgang selbst ist das Dichtungsmaterial fest in den Trennbereichen bei den Innenwandungen der Einformungen 9 des Außengehäuses 3 verbunden. Die Trennbereiche sind dadurch auch gut abgedichtet, so daß sich Dichtigkeitsprüfungen wie bisher, wo insbesondere auf Dichtigkeit zwischen dem Außengehäuse 3 und der jeweiligen Dichtung geprüft wurde, erübrigen. Auch die Kanäle 12 zwischen der äußeren Ringdichtung 8 und der inneren Lippendichtung 7 schaffen noch eine formschlüssige Verbindung, so daß insgesamt weder in Montagestellung noch in Betriebsstellung zusätzliche Halter für die Dichtungen erforderlich sind. In Figur 1 und 3 ist zwar jeweils ein Ventilführungsteil 4 mit einem der Lippendichtung 7 zugewandten Stabilisierring 17 gezeigt, der sich unterhalb der Lippendichtung befindet, er hat hier jedoch nicht die Aufgabe, die durch das Einspritzen bereits festgelegte Lippendichtung in ihrer Aufnahmenut 11 zu halten.

Sind für die beiden Dichtungen 7, 8 gleiche Dichtungsmaterialien vorgesehen, kommt man mit einem einzigen Spritzvorgang aus. Werden jedoch für die äußere Ringdichtung und die innere Lippendichtung unterschiedliche Dichtungsmaterialien verwendet, beispielsweise für die Lippendichtung 7 ein etwas weicheres, elastisches Material, kann es zweckmäßig sein, die beiden Dichtungen voneinander getrennt zu spritzen und dabei gegebenenfalls auch nacheinander ablaufende Spritz-Arbeitsgänge vorzusehen. Es besteht aber auch die Möglichkeit, in einem einzigen Spritzvorgang unterschiedliche Spritzmaterialien einzubringen. Insbesondere beim gleichzeitigen Einbringen unterschiedlicher Spritzmaterialien ist es zweckmäßig, keine Verbindungskanäle 12 zwischen den Aufnahmenuten für die Dichtungen vorzusehen, wie dies in den Figuren 3 und 4 gezeigt ist. Bei dieser Ausführungsform eines Rückflußverhinderers 2 ist eine im Querschnitt gegenüber Figur 1 und 2 andere Ringdichtung 8a vorgesehen. Diese Ringdichtung 8a hat außenseitig einen gerundeten Verlauf und es ist deshalb außenseitig bei der Öffnungsseite der Ringnut 10 keine Anspritzstelle vorgesehen. Man könnte in diesem Falle nur über eine innere Anspritzstelle bei der Lippendichtung 7 und über Verbindungskanäle 12 anspritzen und/oder zum Beispiel von der oberen Stirnseite 18 des Außengehäuses 3 einen Spritzkanal 19 zu der Ringnut 10 den Verbindungskanälen 12 oder der Aufnahmenut 11 vorsehen.

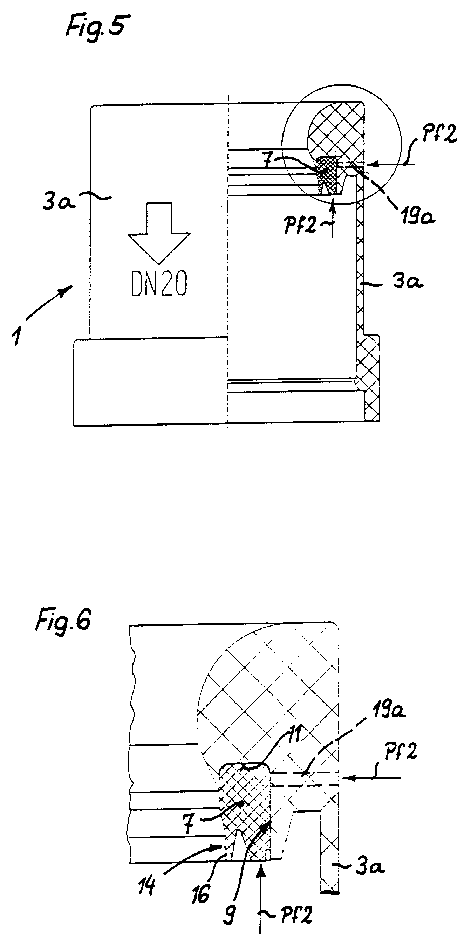

Die Figuren 5 und 6 zeigen schließlich noch das mit einer inneren Lippendichtung 7 versehene Außengehäuse 3a eines Rückflußverhinderers, wobei dieses Außengehäuse in sogenannter Patronenbauform zum Einbau in Wasserzähler vorgesehen ist. Eine äußere Dichtung ist hier nicht vorgesehen.
Die innere Lippendichtung kann, wie durch den Pfeil Pf 2 angedeutet, an ihrem radial äußeren freien, und außerhalb der Dichtzone liegenden Bereich eine oder mehrere Anspritzstellen aufweisen.
Wie strichliniert angedeutet, könnte aber auch anstatt dieser Anspritzstelle oder zusätzlich ein Spritzkanal 19a von der Außenseite des Gehäuses 3a vorgesehen sein. Auch hier ist die Lippendichtung 7 nach dem Spritzvorgang ausreichend fest und dicht mit dem Außengehäuse 3a verbunden.

Erwähnt sei noch, daß der jeweilige Dichtungs-Anlagebereich 14, also die jeweilige Außenkontur der Dichtungen 7, 8, 8a die maßlichen Verhältnisse bestimmt. Dies ist durch die Spritzgußform exakt und mit geringsten Toleranzen wiederholbar vorgegeben. Somit lassen sich auch bei einer Massenproduktion maßlich exakte und geringsttolerierte Einbauteile herstellen.

Die Innenkontur der Einformungen für die Dichtungen und deren Abmessungen haben auf das Außenmaß der Dichtungen somit keinen Einfluß und es sind deshalb auch nicht die sonst erforderlichen, aufwendigen Maßnahmen für eine exakte Maßhaltigkeit notwendig.
Das als Spritzgußteil ausgebildete Außengehäuse 3, 3a kann beispielsweise aus Polypropylen bestehen und für die Dichtungen 7, 8, 8a wird ein spritzbares, gummiähnliches Material, beispielsweise auf Silikonbasis oder spritzbares NBR-Material verwendet. Zur Kennzeichnung und Kontrolle können auch unterschiedlich farbige Materialien eingesetzt werden, so daß man beispielsweise bei einer Kontrolle einen guten Kontrast zum benachbarten Gehäuse oder dergleichen hat.
Das zur Herstellung des Einbauteiles vorgesehene Spritzgußwerkzeug ist zweckmäßigerweise als Wendewerkzeug ausgebildet, wobei in einer ersten Lage das Außengehäuse und in Wendelage dann die Dichtungen gespritzt werden.

## Patentansprüche

1. Verfahren zum Herstellen eines im sanitären Bereich einsetzbaren Rückflußverhinderers mittels eines Kunststoff-Spritzverfahrens, wobei der Rückflußverhinderer einen Grundkörper (3,3a), eine äußere Ringdichtung (8) und eine mit einem Schließkörper (5) zusammenarbeitende, innere Lippendichtung (7) aufweist, **dadurch gekennzeichnet**, daß in einem ersten Arbeitsgang der Grundkörper (3, 3a) des Rückflußverhinderers gespritzt wird, daß anschließend die äußere Ringdichtung (8) und die innere Lippendichtung (7) gemeinsam in einem zweiten Arbeitsgang über miteinander verbundene Anspritzkanäle beziehungsweise Verbindungskanäle in die im Grundkörper dafür vorhandenen Aufnahmeöffnungen (9) eingespritzt werden und durch den Spritzvorgang mit dem Grundkörper dicht verbunden werden.

2. Verfahren nach Anspruch 1, dadurch gekennzeichnet, daß das Anspritzen der Dichtungen außerhalb des jeweiligen Dichtungs-Anlagebereiches (14) der Dichtungen vorgenommen wird.

3. Rückflußverhinderer aus Kunststoff, mit einem Grundkörper sowie mit einer äußeren Ringdichtung (8) und einer mit einem Schließkörper (5) zusammenarbeitenden, inneren Lippendichtung (7), hergestellt gemäß dem Verfahren nach Anspruch 1 oder 2, **dadurch gekennzeichnet**, daß der Grundkörper (3) und die Dichtungen (7,8,8a) Kunststoff-Spritzgußteile aus unterschiedlichem Material sind, daß bei den benachbart angeordneten Dichtungen (7,8) die dafür vorgesehenen Einformungen (9) in dem Grundkörper (3) über einen oder mehrere Verbindungskanäle (12), die durch mit Dichtungsmaterial gefüllte Spritzkanäle gebildet sind, miteinander verbunden sind, und daß die Dichtungen durch Anspritzen mit dem Grundkörper dicht verbunden sind.

4. Rückflußverhinderer nach Anspruch 3, dadurch gekennzeichnet, daß der Grundkörper im Bereich der Dichtungen, Aufnahmekammern in Form von offenen Einformungen, Ringnuten oder dergleichen aufweist.

5. Rückflußverhinderer nach Anspruch 3 oder 4, dadurch gekennzeichnet, daß bei den Öffnungsseiten der Einformungen (9) oder dergleichen Anspritzstellen (Pf 2), gegebenenfalls zusätzliche Anspritzstellen vorgesehen sind, die sich vorzugsweise außerhalb des Dichtungs-Anlagebereiches (14) befinden und daß die Dichtung wenigstens einen, gegebenenfalls umlaufenden Querschnitts-Rücksprung von ihrer Dichtungs-Anlageseite hat, in dem sich die Anspritzstelle(n) befindet (befinden).

## Claims

1. A method for a non-return valve usable in the sanitary sector to be manufactured by means of a plastics injection moulding process, the non-return valve having a basic element (3, 3a), an outer annular seal (8) and an inner lip seal (7) co-operating with a closing element (5), **characterized in that** in a first operation, the basic element (3, 3a) of the non-return valve is injection moulded, that then, in a second operation, the outer annular seal (8) and the inner lip seal (7) are jointly injected, via interconnected runners or connecting channels, into the receiving openings (9) present therefor in the basic element and are tightly bonded to the basic element by the injection moulding operation.

2. A method as claimed in claim 1, characterized in that the gating of the seals is carried out outside the respective seal-seat region (14) of the seals.

3. A non-return valve of plastic, including a basic element, an outer annular seal (8) and an inner lip seal (7) co-operating with a closing element (5), manufactured according to the method of claim 1 or claim 2, **characterized in that** the basic element (3) and the seals (7, 8, 8a) are plastic injection moulded parts made of different material, that the depressions (9) provided in the basic element (3) for the adjacent seals (7, 8) are interconnected by one or more connecting channels (12) formed by injection channels filled with sealing material, and that the seals are closely bonded to the basic element by injection moulding.

4. A non-return valve as claimed in claim 3, characterized in that the basic element has, in the region of the seals, seating chambers in the form of open recesses, annular grooves or the like.

5. A non-return valve as claimed in claim 3 or claim 4, characterized in that gate points (Pf 2), if required additional gate points, are provided at the opening sides of the recesses (9) or the like and are preferably located outside the seal-seat region (14), and that the seal has at least one, preferably circumferential, cross-sectional recess from its outer seal-seat side, in which recess the gate point(s) is (are) located.

## Revendications

1. Procédé pour fabriquer au moyen d'une opération d'injection de matière plastique un clapet antiretour qui peut être utilisé dans le domaine des sanitaires, dans lequel le clapet antiretour comporte un corps de base (3, 3a), un joint d'étanchéité annulaire extérieur (8) et un joint d'étanchéité à lèvre intérieur (7) qui coopère avec un corps de fermeture (5), caractérisé par le fait que l'on injecte le corps de base (3, 3a) du clapet antiretour dans une première phase de travail, et que, dans une deuxième phase de travail, on injecte ensuite à la fois le joint d'étanchéité annulaire extérieur (8) et le joint d'étanchéité à lèvre intérieur (7) dans les ouvertures formant logement (9) qui sont présentes à cet effet dans le corps de base, et ce, par l'intermédiaire de canaux d'injection ou de canaux de liaison, respectivement, qui sont reliés entre eux, ces joints étant liés d'une manière étanche au corps de base du fait du processus d'injection.

2. Procédé selon la revendication 1, caractérisé par le fait que l'injection des joints d'étanchéité est réalisée à l'extérieur de la zone d'appui et d'étanchéité respective (14) des joints d'étanchéité.

3. Clapet antiretour en matière plastique, comprenant un corps de base, un joint d'étanchéité annulaire extérieur (8) et un joint d'étanchéité à lèvre intérieur (7) qui coopère avec un corps de fermeture (5), et fabriqué par le procédé selon la revendication 1 ou 2, caractérisé par le fait que le corps de base (3) et les joints d'étanchéité (7, 8, 8a) sont des pièces en matière plastique moulées par injection et constituées par des matières différentes, par le fait que, pour les joints d'étanchéité (7, 8) disposés au voisinage les uns des autres, les renfoncements (9) qui sont prévus à cet effet dans le corps de base (3) sont reliés entre eux par l'intermédiaire d'un ou plusieurs canaux de liaison (12) qui sont constitués par des canaux d'injection remplis de matière assurant l'étanchéité, et par le fait que les joints d'étanchéité sont liés d'une manière étanche au corps de base grâce à l'injection.

4. Clapet antiretour selon la revendication 3, caractérisé par le fait que le corps de base présente, dans la région des joints d'étanchéité, des chambres formant logements sous la forme de renfoncements ouverts, de rainures annulaires ou similaires.

5. Clapet antiretour selon la revendication 3 ou 4, caractérisé par le fait qu'il est prévu, sur les côtés de l'ouverture des renfoncements (9) ou similiares, des endroits d'injection (Pf2) qui sont le cas échéant des endroits d'injection supplémentaires et qui se trouvent de préférence à l'extérieur de la zone d'appui et d'étanchéité (14), et par le fait que le joint d'étanchéité présente en section transversale au moins une partie, le cas échéant annulaire, qui est en retrait par rapport à sa face d'appui et d'étanchéité et dans laquelle se trouve(nt) le ou les endroits d'injection.
